# EUROPÄISCHE PATENTSCHRIFT

(11) **EP 1 602 549 B1**
(45) Veröffentlichungstag und Bekanntmachung des Hinweises auf die Patenterteilung: **19.03.2008**
(21) Anmeldenummer: 05009950.6
(22) Anmeldetag: 06.05.2005
(51) Int. Cl.: B62D 1/06

(54) **Lenkrad für ein Kraftfahrzeug**
Vehicle steering wheel
Volant pour véhicules

(30) Priorität: 14.05.2004 DE 102004024053; 08.06.2004 DE 102004027870
(43) Veröffentlichungstag der Anmeldung: 07.12.2005
(73) Patentinhaber: TRW Automotive Safety Systems GmbH, 63743 Aschaffenburg (DE)
(72) Erfinder: Miltenberger, Michael, 63150 Heusenstamm (DE); Bachmann, Stefan, 63773 Goldbach (DE); Fäth, Stefan, 63743 Aschaffenburg (DE)
(74) Vertreter: Strass, Jürgen

(56) Entgegenhaltungen:
- EP-A- 0 820 914
- EP-A- 0 849 127
- US-A1- 2004 050 204
- PATENT ABSTRACTS OF JAPAN Bd. 2003, Nr. 03, 5. Mai 2003 (2003-05-05) -& JP 2002 326575 A (NIPPON PLAST CO LTD), 12. November 2002 (2002-11-12)

## Beschreibung

Die Erfindung betrifft ein Lenkrad für ein Kraftfahrzeug, insbesondere ein Lenkrad, bei dem das Lenkradskelett nicht umschäumt oder umspritzt ist. Die Erfindung betrifft ferner ein Verfahren zur Herstellung eines solchen Lenkrads.

Das Umschäumen oder Umspritzen des Lenkradskeletts mit einem Schaum bzw. einem Kunststoff gibt insbesondere dem Lenkradkranz in der Regel die endgültige Außenform, die dann nur noch mit dünnen Beschichtungen (z.B. einem Leder) ergänzt wird. Durch den Wegfall des aufwendigen Umschäumungsprozesses können zwar bei der Lenkradherstellung Kosten eingespart werden, die Lenkräder sollten aber weiterhin haptisch für den Fahrer angenehm zu greifen sein. Ein grundsätzliches Problem bei solchen Lenkrädern besteht darin, daß sich das ansonsten durch die Umschäumung hergestellte geschlossene Querschnittsprofil des Lenkradkranzes nicht ohne größeren Aufwand durch das metallische Lenkradskelett nachbilden läßt. Außerdem ist die durch die Vergrößerung des Kranzbereichs des Lenkradskeletts bedingte Gewichtszunahme zu berücksichtigen.

In der EP-A-1 264 756 ist ein Lenkrad mit einem aus einem Hohlprofil gebildeten Lenkradkranz gezeigt. Das Hohlprofil ist aus einem ringförmigen Abschnitt eines Blechskeletts geformt und gemäß einer der darin vorgeschlagenen Ausführungsformen direkt mit einem Leder überzogen. Ein Vorsprung eines zusätzlich vorgesehenen, innerhalb des Hohlprofils angeordneten Körpers sorgt für eine geschlossene Außenfläche des Hohlprofils.

Aus der DE-A-100 59 133 ist ein Lenkrad bekannt, bei dem auf ein einstückiges Lenkradskelett ein Weichschaum geklebt ist, der wiederum mit einem Leder bezogen ist. Die Außengeometrie des Lenkradkranzes ist durch einen Kranzbereich des Lenkradskeletts definiert. Um das Gewicht des Lenkradkranzes und damit die Vibrationsneigung des Lenkrads zu reduzieren, sind Ausnehmungen im Kranzbereich des Lenkradskeletts vorgesehen. Es werden verschiedene Maßnahmen zum Überbrücken der Ausnehmungen vorgeschlagen, damit sie von außen nicht mehr mit der Hand ertastbar sind.

Ein Lenkrad für ein Kraftfahrzeug mit den Merkmalen des Oberbegriffs des Anspruchs ist aus der EP-A-0 849 127 bekannt. Dieses Lenkrad ist im wesentlichen aus einem als Druckgußteil ausgeführten Lenkradskelett sowie einer Ober- und einer Unterschale aus Kunststoff zusammengesetzt, wobei sich die äußere Kontur des Lenkradkranzes aus der Geometrie der Ober- und Unterschale in diesem Bereich ergibt.

Aufgabe der Erfindung ist es, ein leichtes, einfach eingebautes Fahrzeuglenkrad zu schaffen, das ohne Umschäumung des Lenkradskeletts auskommt, aber dennoch allen haptischen Anforderungen genügt.

Zur Lösung dieser Aufgabe wird ein Lenkrad für ein Kraftfahrzeug mit den Merkmalen des Anspruchs 1 vorgeschlagen. Die Besonderheit des erfindungsgemäßen Lenkrads besteht darin, daß der Lenkradkranz nicht vollständig durch ein schwer herzustellendes geschlossenes Profil eines Metallskeletts gebildet wird. Die Erfindung sieht vielmehr vor, daß der Lenkradkranz nur zum Teil durch das Skelett definiert ist. Das Skelett des erfindungsgemäßen Lenkrads ist damit kein Skelett mehr im herkömmlichen Sinne, sondern eher eine Armierung. Ergänzt bzw. geschlossen wird das Querschnittsprofil des Lenkradkranzes durch das Abdeckteil aus Kunststoff, das gleichzeitig zur Abdeckung des unteren Bereichs des Lenkradmittelteils dient. Dadurch wird eine erhebliche Gewichtseinsparung erreicht, ohne daß hierfür Ausnehmungen im Lenkradkranz erforderlich sind. Des weiteren ist eine Zwischenlage aus weichschaum unmittelbar auf dem vom skelett gebildeten oberen Teil des Lenkradkranzes sowie auf dem vom rückseitigen Abdeckteil gebildeten unteren Teil des Lenkradkranzes befestigt. Unmittelbar auf der Zwischenlage ist ein Lederbezug befestigt.

Bei der bevorzugten Ausführungsform der Erfindung ist an das Abdeckteil wenigstens eine Rippe angeformt. Die Verbindung des Abdeckteils mit dem Skelett ist vorzugsweise dadurch hergestellt, daß wenigstens eine der angeformten Rippen durch eine Ultraschallschweiß-, Warmverstemm-, Schraub-, Klebe- oder Schnapphakenverbindung am Skelett befestigt ist.

Gemäß einer Weiterbildung der Erfindung ist wenigstens ein am Abdeckteil befestigter Einleger vorgesehen. Ein solcher Einleger, der vorzugsweise aus Stahl gebildet ist, erhöht das Massenträgheitsmoment des Lenkrads. Die Anordnung und Befestigung des Einlegers am Abdeckteil läßt eine flexible Gestaltung des Einlegers zu, so daß verschiedenen vorgegebenen Anforderungen entsprochen: werden kann.

Vorzugsweise ist der Einleger in das Abdeckteil integriert, so daß beim Herstellen des Abdeckteils durch Kunststoff-Spritzen der Einleger mitumspritzt wird. Dadurch entfällt eine ansonsten notwendige zusätzliche Befestigung des Einlegers zur Vermeidung von Relativbewegungen zwischen den Bauteilen.

Durch das Umspritzen kann eine vom Einleger ausgehende Geräuschentwicklung ausgeschlossen werden, insbesondere wenn der Einleger vollständig umspritzt ist.

Die Erfindung schafft auch ein Verfahren zur Herstellung eines erfindungsgemäßen Lenkrads mit den Merkmalen des Anspruchs 13.

Vorteilhafte und zweckmäßige Ausgestaltungen des erfindungsgemäßen Lenkrads sind in den Unteransprüchen angegeben.

Weitere Merkmale und Vorteile der Erfindung ergeben sich aus der nachfolgenden Beschreibung einer bevorzugten Ausführungsform und aus den beigefügen Zeichnungen, auf die Bezug genommen wird. In den Zeichnungen zeigen:
- Figur 1 einen Querschnitt durch eine Hälfte eines erfindungsgemäßen Lenkrads im Bereich einer Speiche;
- Figur 2 einen Querschnitt durch den Kranz des Lenkrads aus Figur 1 neben einer Speiche gemäß einer ersten Ausführungsvariante;
- Figur 3 einen Querschnitt durch den Lenkradkranz gemäß einer zweiten Ausführungsvariante;
- Figur 4 einen Querschnitt durch den Lenkradkranz gemäß einer dritten Ausführungsvariante;
- Figur 5 eine Draufsicht auf ein rückseitiges Abdeckteil eines erfindungsgemäßen Lenkrads;
- Figur 6 eine Schnittansicht entlang der Linie A-A in Figur 5; und
- Figur 7 einen Querschnitt durch den Kranz eines Lenkrads gemäß einer weiteren Ausführungsvariante.

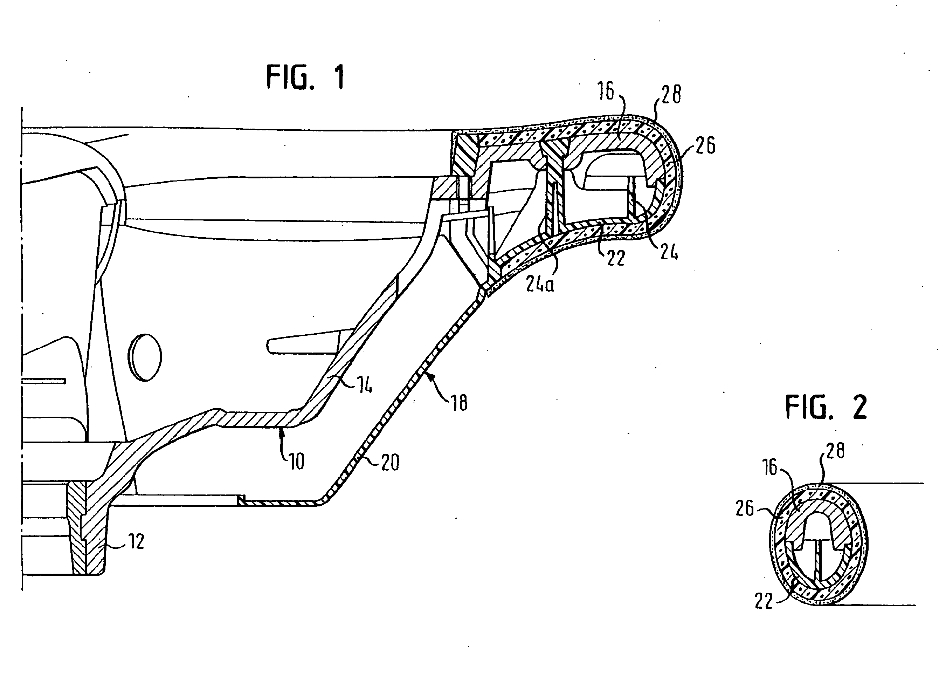

Wie in Figur 1 zu erkennen ist, umfaßt das erfindungsgemäße Lenkrad ein in einem Stück durch Druckgießen oder Spritzen hergestelltes Skelett 10. Das Skelett kann im wesentlichen in drei Abschnitte unterteilt werden: eine Nabe 12, mehrere Speichen 14 (von denen nur eine dargestellt ist) und einen oberen Teil 16 eines Lenkradkranzes. Da die Geometrie des Lenkrads im Bereich der anderen, nicht gezeigten Speichen ebenso ausgeführt ist wie in dem in Figur 1 dargestellten Bereich und da die Speichen gleichmäßig auf den Umfang verteilt angeordnet sind, ist der in Figur 1 gezeigte Halbschnitt ausreichend, um die Geometrie des Lenkrads in dem für die Erfindung wesentlichen Teil des Lenkrads zu definieren.

Das Lenkrad umfaßt ferner ein rückseitiges Abdeckteil 18 aus Kunststoff. Ein erster Abschnitt 20 des Abdeckteils 18 deckt einen unteren Bereich des Mittelteils des Lenkrads, in dem in bekannter Weise ein Airbagmodul untergebracht sein kann, bis zur Nabe 12 größtenteils ab. Ein zweiter Abschnitt 22 des Abdeckteils 18 ergänzt als unteres Lenkradkranzteil den oberen Lenkradkranzteil 16, so daß der Lenkradkranz des erfindungsgemäßen Lenkrads aus diesen zwei Komponenten zusammengesetzt ist. Das Abdeckteil 18 weist mehrere angeformte Verstärkungs- bzw. Stützrippen 24 auf. In Figur 1 ist zu erkennen, daß das Abdeckteil 18 mittels einer Befestigungsrippe 24a nahe dem Lenkradkranz mit dem Skelett 10 verbunden ist. Die dauerhafte Befestigung des Abdeckteils 18 über die Rippe 24a am Skelett 10 ist durch Ultraschallschweißen, Warmverstemmen, Verschrauben, Kleben oder eine Schnapphakenverbindung hergestellt.

Auf den durch den oberen Lenkradkranzteil 16 des Skeletts 10 und den unteren Lenkradkranzteil des Abdeckteils 18 gebildeten Lenkradkranz ist kein schalenförmiges Spritzgußteil oder geschäumtes Teil aufgesetzt, und der Lenkradkranz ist auch nicht umspritzt oder umschäumt. Vielmehr ist, wie auch in der Querschnittansicht der Figur 2 zu sehen ist, unmittelbar auf dem Lenkradkranz eine Zwischenlage 26 aus Weichschaum (z.B. Zellkautschuk) befestigt. Außenseitig ist direkt auf dem Weichschaum noch ein Lederbezug 28 aus gestanztem Leder befestigt. Die Befestigung sowohl der Zwischenlage 26 auf dem Skelett 10 als auch des Lederzugs 28 auf der Zwischenlage 26 ist bevorzugt durch Kleben hergestellt.

Die Zwischenlage 26 besteht aus einer im nicht befestigten Zustand ebenen, dünnen Weichschaumplatte, die eine gestanzte Kontur aufweist. Die Dicke dieser flexiblen Platte ist, ebenso wie die des Lederbezugs 28 konstant. Die Gesamtdicke der Zwischenlage 26 und des Lederbezugs 28 beträgt etwa 3 mm, so daß das Skelett 10 und das Abdeckteil 18, genauer gesagt der obere Lenkradkranzteil 16 des Skeletts 10 und der den unteren Lenkradkranzteil bildende zweite Abschnitt 22 des Abdeckteils 18, die Außengeometrie des fertig bezogenen Lenkradkranzes definieren, der in Figur 1 zu sehen ist.

Der nicht mit der Zwischenlage 26 und dem Lederbezug 28 bezogene erste Abschnitt 20 des Abdeckteils 18 definiert die Außengeometrie des Mittelteils des Lenkrads. In der in Figur 1 gezeigten Ausführungsform stellt das Abdeckteil 18 die sichtbare Außenwand des Lenkradmittelteils dar.

Zur Herstellung eines erfindungsgemäßen Lenkrads wird zunächst das Skelett 10 mit der Nabe 12, wenigstens einer Speiche 14 und dem oberen Teil 16 des Lenkradkranzes durch Gießen oder Spritzen hergestellt. Das rückseitige Abdeckteil 18 aus Kunststoff, das den Mittelteil des Lenkrads wenigstens teilweise abdeckt und den unteren Teil des Lenkradkranzes bildet, wird am Skelett 10 befestigt, vorzugsweise durch Ultraschallschweißen, Warmverstemmen, Verschrauben, Kleben oder eine Schnapphakenverbindung. Anschließend wird die Zwischenlage 26 aus Weichschaum unmittelbar auf dem Lenkradkranz und der Lederbezug 28 unmittelbar auf der Zwischenlage 26 befestigt. Alternativ kann vorab bereits eine Abdeckung aus Zwischenlage 26 und darauf befestigtem Lederbezug 28 gebildet werden, die dann mit der Zwischenlage 26 als Innenseite auf dem Lenkradkranz befestigt wird.

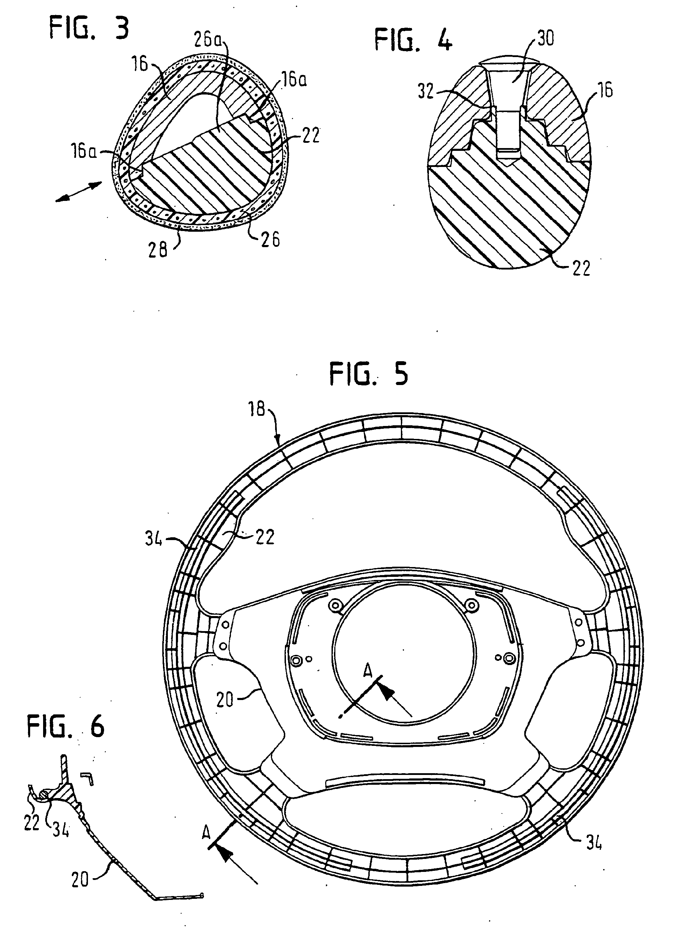

Figur 3 zeigt eine Ausführungsvariante, bei der der Abschnitt 22 des Kunststoffabdeckteils 18 im Querschnitt eine stufenartige Erhebung 26a aufweist, die in entsprechenden innenseitigen Ausnehmungen 16a des Skeletteils 16 aufgenommen ist. Durch diese Konturgebung wird das Abdeckteil 18 vom Skelett 10 in die beiden durch die Pfeile gekennzeichneten Richtungen gehalten.

Bei der in Figur 4 (ohne Lederbezug) gezeigten Ausführungsvariante wird der Abschnitt 22 des Kunststoffabdeckteils 18 mittels einer Dübelverbindung am oberen Lenkradkranzteil 16 gehalten. Der Abschnitt 22 und der obere Lenkradkranzteil 16 haben ein komplementäres Stufenprofil. Beim Einschlagen des Dübels 30 in den Abschnitt 22 verastet das Gewinde des Dübels 30 im Kunststoff des Abschnitts 22. Außerdem wird eine umlaufende Lippe 32 des Abschnitts 22 durch den sich in Richtung des oberen Lenkradkranzteils 16 erweiternden Dübel 32 gegen den oberen Lenkradkranzteil 16 verspannt. Somit ist eine doppelt gesicherte Verbindung hergestellt.

In den Figuren 5 und 6 ist ein Abdeckteil 18 eines erfindungsgemäßen Lenkrads mit zwei Stahleinlegern 34 dargestellt. Die Stahleinleger sind symmetrisch angeordnet und weisen eine vorbestimmte Dicke und Länge auf. Die Stahleinleger 34 sind in den Abschnitt 22 des Abdeckteils 18 integriert, d. h. beim Herstellen des Abdeckteils 18 durch Kunststoff-Spritzen werden die Einleger 34 mitumspritzt. Dabei können die Stahleinleger 34 im Querschnittsprofil vollständig oder nur teilweise von Kunststoff umgeben sein. Beim Spritzvorgang werden die Stahleinleger 34 durch Magnetdome positioniert.

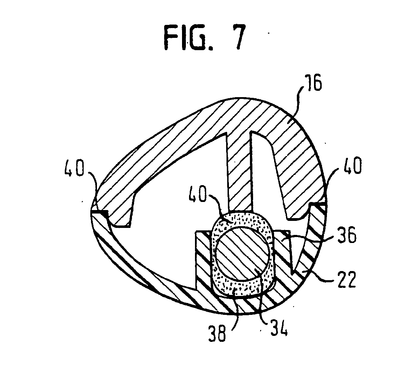

Bei der in Figur 7 gezeigten Ausführungsvariante ist der Stahleinleger 34 nicht in den Abschnitt 22 eingespritzt, sondern mit diesem verklebt. Die Position des Einlegers 34 wird vor dem Verkleben durch Stege 36 und/oder Haltedome festgelegt. Ein Kleber wird durch eine Düse an bestimmten Stellen 38 auf der Innenseite des Abschnitts 22 aufgetragen, bevor dann der obere Lenkradkranzteil 16 montiert wird. Im Falle eines Verklebens des oberen Lenkradteils 16 mit dem Abschnitt 22 über Klebeflächen bzw. Klebestellen 40 wird das Einkleben des Stahleinlegers 34 im gleichen Arbeitsgang vorgenommen.

## Patentansprüche

1. Lenkrad für ein Kraftfahrzeug, mit einem Skelett (10), das eine Nabe (12), wenigstens eine Speiche (14) und einen oberen Teil (16) eines Lenkradkranzes bildet, und mit einem rückseitigen Abdeckteil (18) aus Kunststoff, das einen unteren Bereich des Mittelteils des Lenkrads wenigstens teilweise abdeckt und außerdem einen unteren Teil des Lenkradkranzes bildet, **dadurch gekennzeichnet, daß** unmittelbar auf dem vom Skelett (10) gebildeten oberen Teil (16) des Lenkradkranzes sowie auf dem vom rückseitigen Abdeckteil (18) gebildeten unteren Teil des Lenkradkranzes eine Zwischenlage (26) aus Weichschaum und unmittelbar auf der Zwischenlage (26) ein Lederbezug (28) befestigt ist.

2. Lenkrad nach Anspruch 1, **dadurch gekennzeichnet, daß** der durch das Skelett (10) und das Abdeckteil (18) gebildete Lenkradkranz die Außengeometrie des mit der Zwischenlage (26) und dem Lederbezug (28) versehenen Lenkradkranzes definiert.

3. Lenkrad nach Anspruch 1 oder 2, **dadurch gekennzeichnet, daß** die Gesamtdicke der Zwischenlage (26) und des Lederbezugs (28) im wesentlichen 3 mm nicht übersteigt.

4. Lenkrad nach einem der vorhergehenden Ansprüche, **dadurch gekennzeichnet, daß** das Abdeckteil (18) die Außengeometrie des unteren Bereichs des Mittelteils des Lenkrads definiert.

5. Lenkrad nach einem der vorhergehenden Ansprüche, **dadurch gekennzeichnet, daß** an das Abdeckteil (18) wenigstens eine Rippe (24, 24a) angeformt ist.

6. Lenkrad nach Anspruch 5, **dadurch gekennzeichnet, daß** wenigstens eine der angeformten Rippen (24a) durch eine Ultraschallschweiß-, Warmverstemm-, Schraub-, Klebe- oder Schnapphakenverbindung am Skelett (10) befestigt ist.

7. Lenkrad nach einem der vorhergehenden Ansprüche, **dadurch gekennzeichnet, daß** der obere Teil (16) und der untere Teil des Lenkradkranzes ein komplementäres, gestuftes Querschnittsprofil aufweisen.

8. Lenkrad nach einem der vorhergehenden Ansprüche, **dadurch gekennzeichnet, daß** der obere Teil (16) und der untere Teil des Lenkradkranzes mittels einer Dübelverbindung aneinander gehalten werden.

9. Lenkrad nach einem der vorhergehenden Ansprüche, **dadurch gekennzeichnet, daß** wenigstens ein am Abdeckteil (18) befestigter Einleger (34) vorgesehen ist.

10. Lenkrad nach Anspruch 9, **dadurch gekennzeichnet, daß** der Einleger (34) in das Abdeckteil (18) integriert ist.

11. Lenkrad nach Anspruch 9, **dadurch gekennzeichnet, daß** der Einleger (34) in das Abdeckteil (18) eingeklebt ist.

12. Lenkrad nach Anspruch 11, **dadurch gekennzeichnet, daß** der Einleger (34) durch Stege (36) und/oder Haltedome positioniert ist.

13. Verfahren zur Herstellung eines Lenkrads nach einem der vorhergehenden Ansprüche, **gekennzeichnet durch** folgende Schritte:
- Herstellen des Skeletts (10) mit der Nabe (12), wenigstens einer Speiche (14) und dem oberen Teil (16) des Lenkradkranzes **durch** Gießen oder Spritzen,
- Befestigen des rückseitigen Abdeckteils (18) aus Kunststoff, das den unteren Bereich des Mittelteils des Lenkrads wenigstens teilweise abdeckt und den unteren Teil des Lenkradkranzes bildet, am Skelett (10)
- Befestigen einer Zwischenlage (26) aus Weichschaum unmittelbar auf dem vom Skelett (10) gebildeten oberen Teil (16) des Lenkradkranzes sowie auf dem vom rückseitigen Abdeckteil (18) gebildeten unteren Teil des Lenkradkranzes, und
- Befestigen eines Lederbezugs (28) unmittelbar auf der Zwischenlage (26).

14. Verfahren nach Anspruch 13, **dadurch gekennzeichnet, daß** das Abdeckteil (18) am Skelett (10) durch Ultraschallschweißen, Warmverstemmen, Verschrauben, Kleben oder eine Schnapphakenverbindung befestigt wird.

15. Verfahren nach Anspruch 13 oder 14, **dadurch gekennzeichnet, daß** das Abdeckteil (18) durch Kunststoff-Spritzen hergestellt wird, wobei beim Spritzvorgang wenigstens ein Einleger (34) mitumspritzt wird.

16. Verfahren nach Anspruch 15, **dadurch gekennzeichnet, daß** der Einleger (34) beim Spritzvorgang durch Magnetdome positioniert wird.

17. Verfahren nach Anspruch 13 oder 14, **dadurch gekennzeichnet, daß** wenigstens ein Einleger (34) in das Abdeckteil (18) eingeklebt wird.

18. Verfahren nach Anspruch 17, **dadurch gekennzeichnet, daß** der obere Teil (16) und der untere Teil des Lenkradkranzes miteinander verklebt werden und das Einkleben des Einlegers (34) im gleichen Arbeitsgang vorgenommen wird.

## Claims

1. A steering wheel for a motor vehicle, comprising a skeleton (10) which forms a hub (12), at least one spoke (14), and an upper part (16) of a steering wheel rim, and comprising a rear-side covering part (18) made of plastic, which at least partially covers a lower area of the central part of the steering wheel and further forms a lower part of the steering wheel rim, **characterized in that** an intermediate layer (26) of soft foam is attached directly to the upper part (16) of the steering wheel rim formed by the skeleton (10) and to the lower part of the steering wheel rim formed by the rear-side covering part (18), and a leather covering (28) is attached directly to the intermediate layer (26).

2. The steering wheel according to claim 1, **characterized in that** the steering wheel rim formed by the skeleton (10) and the covering part (18) defines the exterior geometry of the steering wheel rim provided with the intermediate layer (26) and the leather covering (28).

3. The steering wheel according to claim 1 or 2, **characterized in that** the total thickness of the intermediate layer (26) and the leather covering (28) does not substantially exceed 3 mm.

4. The steering wheel according to any of the preceding claims, **characterized in that** the covering part (18) defines the exterior geometry of the lower area of the central part of the steering wheel.

5. The steering wheel according to any of the preceding claims, **characterized in that** at least one rib (24, 24a) is molded integrally with the covering part (18).

6. The steering wheel according to claim 5, **characterized in that** at least one of the integrally molded ribs (24a) is attached to the skeleton (10) by an ultrasonic welding, heat caulking, screw, glue, or snap-action hook connection.

7. The steering wheel according to any of the preceding claims, **characterized in that** the upper part (16) and the lower part of the steering wheel rim each have a complementary, stepped cross-sectional profile.

8. The steering wheel according to any of the preceding claims, **characterized in that** the upper part (16) and the lower part of the steering wheel rim are held to each other by means of a dowel connection.

9. The steering wheel according to any of the preceding claims, **characterized in that** at least one insert (34) is provided which is attached to the covering part (18).

10. The steering wheel according to claim 9, **characterized in that** the insert (34) is integrated in the covering part (18).

11. The steering wheel according to claim 9, **characterized in that** the insert (34) is glued in the covering part (18).

12. The steering wheel according to claim 11, **characterized in that** the insert (34) is positioned by webs (36) and/or support domes.

13. A method of manufacturing a steering wheel according to any of the preceding claims, **characterized by** the following steps:
- manufacturing the skeleton (10) including the hub (12), at least one spoke (14), and the upper part (16) of the steering wheel rim by casting or injection molding,
- attaching to the skeleton (10) the rear-side covering part (18) made of plastic, which at least partially covers the lower area of the central part of the steering wheel and forms the lower part of the steering wheel rim,
- attaching an intermediate layer (26) of soft foam directly to the upper part (16) of the steering wheel rim formed by the skeleton (10) and to the lower part of the steering wheel rim formed by the rear-side covering part (18), and
- attaching a leather covering (28) directly to the intermediate layer (26).

14. The method according to claim 13, **characterized in that** the covering part (18) is attached to the skeleton (10) by ultrasonic welding, heat caulking, screwing, gluing, or a snap-action hook connection.

15. The method according to claim 13 or 14, **characterized in that** the covering part (18) is manufactured by a plastic injection molding process, at least one insert (34) being encased in plastic in the injection molding process.

16. The method according to claim 15, **characterized in that** in the injection molding process the insert (34) is positioned by magnetic domes.

17. The method according to claim 13 or 14, **characterized in that** at least one insert (34) is glued into the covering part (18).

18. The method according to claim 17, **characterized in that** the upper part (16) and the lower part of the steering wheel rim are glued to each other, and the gluing of the insert (34) is performed in the same working step.

## Revendications

1. Volant de direction pour un véhicule automobile, comportant un squelette (10) qui forme un moyeu (12), au moins un rayon (14) et une partie supérieure (16) d'une couronne de volant de direction, et comportant une partie de recouvrement postérieure (18) en matière plastique qui recouvre au moins partiellement une région inférieure de la partie médiane du volant de direction et qui forme en outre une partie inférieure de la couronne de volant de direction, **caractérisé en ce qu'**une couche intermédiaire (26) en mousse souple est fixée directement sur la partie supérieure (16) de la couronne de volant de direction, formée par le squelette (10) ainsi que sur la partie inférieure de la couronne de volant de direction, formée par la partie de recouvrement postérieure (18), et un revêtement de cuir (28) est fixé directement sur la couche intermédiaire (26).

2. Volant de direction selon la revendication 1, **caractérisé en ce que** la couronne de volant de direction formée par le squelette (10) et par la partie de recouvrement (18) définit la géométrie extérieure de la couronne de volant de direction pourvue de la couche intermédiaire (26) et du revêtement de cuir (28).

3. Volant de direction selon la revendication 1 ou 2, **caractérisé en ce que** l'épaisseur totale de la couche intermédiaire (26) et du revêtement de cuir (28) ne dépasse pas sensiblement 3 mm.

4. Volant de direction selon l'une des revendications précédentes, **caractérisé en ce que** la partie de recouvrement (18) définit la géométrie extérieure de la région inférieure de la partie médiane du volant de direction.

5. Volant de direction selon l'une des revendications précédentes, **caractérisé en ce que** sur la partie de recouvrement (18) est conformée au moins une nervure (24, 24a).

6. Volant de direction selon la revendication 5, **caractérisé en ce qu'**au moins une des nervures (24a) conformées est fixée sur le squelette (10) par une liaison par soudage à ultrasons, par matage à chaud, par vissage, par collage ou par crochet d'encliquetage.

7. Volant de direction selon l'une des revendications précédentes, **caractérisé en ce que** la partie supérieure (16) et la partie inférieure de la couronne de volant de direction présentent un profil de section transversale complémentaire en gradins.

8. Volant de direction selon l'une des revendications précédentes, **caractérisé en ce que** la partie supérieure (16) et la partie inférieure de la couronne de volant de direction sont maintenues l'une contre l'autre par une liaison par chevilles.

9. Volant de direction selon l'une des revendications précédentes, **caractérisé en ce qu'**il est prévu au moins un insert (34) fixé sur la partie de recouvrement (18).

10. Volant de direction selon la revendication 9, **caractérisé en ce que** l'insert (34) est intégré dans la partie de recouvrement (18).

11. Volant de direction selon la revendication 9, **caractérisé en ce que** l'insert (34) est collé dans la partie de recouvrement (18).

12. Volant de direction selon la revendication 11, **caractérisé en ce que** l'insert (34) est positionné par des traverses (36) et/ou par des dômes de retenue.

13. Procédé de fabrication d'un volant de direction selon l'une des revendications précédentes, **caractérisé par** les étapes suivantes :
- réalisation du squelette (10) avec le moyeu (12), au moins un rayon (14) et la partie supérieure (16) de la couronne de volant de direction par coulage ou par moulage par injection,
- fixation, sur le squelette (10), de la partie de recouvrement (18) postérieure en matière plastique qui recouvre au moins partiellement la région inférieure de la partie médiane du volant de direction et qui forme la partie inférieure de la couronne de volant de direction,
- fixation d'une couche intermédiaire (26) en mousse souple directement sur la partie supérieure (16) de la couronne de volant de direction, qui est formée par le squelette (10) ainsi que sur la partie inférieure de la couronne de volant de direction, qui est formée par la partie de recouvrement (18) postérieure,
et
- fixation d'un revêtement de cuir (28) directement sur la couche intermédiaire (26).

14. Procédé selon la revendication 13, **caractérisé en ce que** la partie de recouvrement (18) est fixée sur le squelette (10) par une liaison par soudage à ultrasons, par matage à chaud, par vissage, par collage ou par crochet d'encliquetage.

15. Procédé selon la revendication 13 ou 14, **caractérisé en ce que** la partie de recouvrement (18) est réalisée par injection de matière plastique, au moins un insert (34) étant incorporé à l'enrobage lors de l'opération d'injection.

16. Procédé selon la revendication 15, **caractérisé en ce que** l'insert (34) est positionné par des dômes magnétiques lors de l'opération d'injection.

17. Procédé selon la revendication 13 ou 14, **caractérisé en ce qu'**au moins un insert (34) est collé dans la partie de recouvrement (18).

18. Procédé selon la revendication 17, **caractérisé en ce que** la partie supérieure (16) et la partie inférieure de la couronne de volant de direction sont collées l'une à l'autre et **en ce que** le collage de l'insert (34) est effectué pendant la même opération de travail.
